# EUROPÄISCHE PATENTSCHRIFT

(11) **EP 1 237 452 B1**
(45) Veröffentlichungstag und Bekanntmachung des Hinweises auf die Patenterteilung: **27.08.2003**
(21) Anmeldenummer: 00975876.4
(22) Anmeldetag: 17.10.2000
(51) Int. Cl.: A47J 36/34

(54) **GASKOCHGERÄT**
GAS COOKER
APPAREIL DE CUISSON A GAZ

(30) Priorität: 30.11.1999 DE 19957722
(43) Veröffentlichungstag der Anmeldung: 11.09.2002
(73) Patentinhaber: BSH Bosch und Siemens Hausgeräte GmbH, 81669 München (DE)
(72) Erfinder: VARNHORN, Günter, 38162 Cremlingen (DE); GRÜTZKE, Joachim, 74374 Zaberfeld-Leonbronn (DE)
(86) Internationale Anmeldenummer: EP0010233
(87) Internationale Veröffentlichungsnummer: WO01039645

(56) Entgegenhaltungen:
- DE-A- 3 732 271
- DE-U- 29 703 237
- GB-A- 2 171 591

## Beschreibung

Die Erfindung betrifft ein Gaskochgerät enthaltend mindestens einen Gasbrenner und einen dem Gasbrenner zugeordneten Topfträger, der auf einer Deckplatte angeordnet ist, gemäß dem Oberbegriff von Anspruch 1.

Aus dem Dokument DE-A-3732271 ist ein gattungsgemäßes Gaskochgerät bekannt. Das Gaskochgerät weist zumindest einen Gasbrenner mit zugeordnetem Topfträger auf, der auf einer Deckplatte angeordnet ist. Gemäß dem Dokument DE-U-29703237 ist ein Topfträgar in Magnetverbindung mit einer magnetisierbaren Deckplatte.

Durch die Erfindung soll die Aufgabe gelöst werden, eine Möglichkeit zu schaffen, durch welche ein Topfträger auf einfache und preiswerte Art und Weise an einem Gaskochgerät lösbar befestigt werden kann. Femer soll durch die Erfindung die Befestigungsmöglichkeit derart sein, daß der Topfträger weder am Brennerdeckel noch am Brennerfuß befestigt zu werden braucht, sondem an einer Deckplatte, z. B. einer Gasmulde oder einer Kochfeldplatte lösbar fixiert werden kann, beispielsweise an einer Glaskeramikplatte oder einer aus einem anderen, nicht magnetischen Material bestehenden Platte, welche ein Kochfeld bildet. Die erforderlichen Mittel sollen preiswert sein und auf einfache Weise ein Reinigen der Deckplatte und des Topfträgers ermöglichen.

Diese Aufgabe wird durch ein Gaskochgerät mit den Merkmalen des Patentanspruches 1 gelöst. Gemäß der Erfindung ist vorgesehen, daß die Dauermagnetanordnung mindestens zwei um die vertikale Mittelachse des Gasbrenners herum verteilte Dauermagnet-Verbindungsstellen aufweist, die je einen am Topfträger und einen an einem Geräteoberteil angeordneten Magnetteil aufweisen, welche einander gegenüberliegend angeordnet sind, wobei mindestens der eine Magnetteil ein Dauermagnet ist und der zugehörige andere Magnetteil entweder ein von diesem Dauermagneten magnetisch anziehbares magnetisches Material oder ein von diesem Dauermagneten magnetisch anziehbarer weiterer Dauermagnet mit entgegengesetzter Polarität ist.

Die Erfindung hat den Vorteil, daß der Topfträger ohne Löcher, Schrauben, Nieten oder ähnliche Befestigungsmittel leicht und schnell befestigbar und wieder lösbar ist. Dies hat den weiteren Vorteil, daß der Topfträger getrennt von der Deckplatte und getrennt vom Gasbrenner gereinigt werden kann. Der Topfträger ist vom Gasbrenner thermisch entkoppelt. Das Aufsetzen und Abnehmen des Topfträgers ist extrem einfach.

Weitere Merkmale der Erfindung sind in den Unteransprüchen enthalten.

Der Topfträger hat vorzugsweise einen Grundkörper aus nicht-magnetischem, nichtmagnetisierbarem Material, an welchem die Magnetteile befestigt sind.

Der Grundkörper hat vorzugsweise nach unten ragende Beine, vorzugsweise drei Stück, an deren unteren Fußenden die Magnetteile angeordnet sind.

Die Deckplatte besteht vorzugsweise aus hitzebeständigem, nicht-magnetischem, nicht magnetisierbarem Material. Sie ist vorzugsweise eine Glaakeramikplatte. Sie kann über einem Gasbrenner eine geschlossene Abdeckung bilden oder mit einer Öffnung versehen sein, in oder durch welche die Gasflammen oder der Gasbrennerkopf ragen.

Die Erfindung wird im folgenden mit Bezug auf die Zeichnungen anhand einer bevorzugten Ausführungsform als Beispiel beschrieben. in den Zeichnungen zeigen
- Fig. 1: schematisch einen Teil-Vertikalschnitt eines Gaskochgerätes mit einem Topfträger nach der Erfindung längs der Ebene I-I von Fig. 2 gesehen,
- Fig. 2: eine Draufsicht auf das Gaskochgeräte und den Topfträger von Fig. 1,
- Fig. 3: einen Vertikalschnitt ähnlich Fig. 1 einer weiteren Ausführungsform nach der Erfindung.

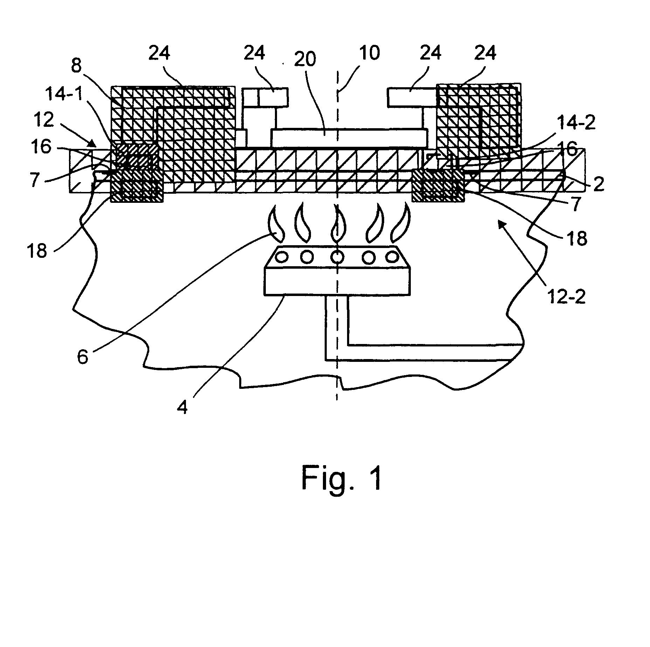

Das in Fig. 1 dargestellte Gaskochgerät enthält eine hitzebeständige Deckplatte 2, welches eine Gasmulde sein kann oder vorzugsweise eine Kochfeldplatte ist, vorzugsweise aus Glaskeramik, welche ein Kochfeld bildet, welches mindestens eine, vorzugsweise mehrere Kochzonen hat. Unter jeder Kochzone befindet sich ein Gasbrenner 4. Die Kochfeldplatte 2 bildet eine auch über jedem Gasbrenner 4 geschlossene Fläche.

Jede Kochzone enthält eine oder mehrere optisch erkennbare Markierungen 7 zur Positioinierung eines Topfträgers 8 je über einem Gasbrenner 4.

Der Topfträger 8 wird durch eine Dauermagnetanordnung 12 (12-1, 12-2, 12-3) in der durch die Markierungen 7 bestimmten Position relativ zum Gasbrenner 4 auf der Kochfeldplatte 2 fixiert bzw. festgehalten und kann entgegen der magnetischen Haltekraft manuell von der Kochfeldplatte entfernt werden zum Reinigen.

Wenn die Dauermagnetanordnung 12 mindestens zwei um die vertikale Mittelachse 10 des Gasbrenners 4 verteilte Dauermagnet-Verbindungsstellen 12-1, 12-2 und 12-3 aufweist, dann ist der Topfträger 8 auf der Kochfeldplatte 2 in jeder Querrichtung fixiert.

Bei der in den Zeichnungen dargestellten bevorzugten Ausführungsform hat der Topfträger 8 drei Beine 14-1, 14-2 und 14-3, in deren Fußsohlen je ein Dauermagnet 16 eingesetzt und befestigt ist. Die Beine 14-1, 14-2 und 14-3 sind um die Mittelachse 10 des Gasbrenners 4 herum mit Abstand voneinander angeordnet.

Im gleichen Abstand und auf gleicher Entfernung relativ zur Mittelachse 10 des Gasbrenners 4 sind auf der Unterseite der Kochfeldplatte 2 Dauermagnete 18 mit entgegengesetzter Polarität befestigt, so daß sie die Magnete 16 des Topfträgers 8 anziehen und in der Position halten, die durch die Dauermagnete 18 der Kochfeldplatte 2 definiert ist.

Der Topfträger 8 weist einen einteiligen Grundkörper 20 aus nicht-magnetisierbarem Material auf, welches hitzebeständig ist, beispielsweise ein Metallgußteil.

Je ein Dauermagnet 18 der Kochfeldplatte 2 und ein ihr benachbarter Dauermagnet 16 des Topfträgers 8 bilden zusammen eine Dauermagnet-Verbindungsstelle 12-1, 12-2, 12-3.

An jeder Dauermagnet-Verbindungsstelle kann anstelle von zwei Dauermagneten 12, 18 nur ein Dauermagnet und ein von diesem magnetisch anziehbares Metallelement (Eisen) vorgesehen sein.

Gemäß anderer Ausführungsform kann der gesamte Topfträger 8 aus magnetisierbarem Eisen bestehen, dessen Beine 14-1, 14-2, 14-3 von den Dauermagneten 18 der Kochfeldplatte 2 magnetisch anziehbar sind.

Der Topfträger hat an seinem oberen Ende mindestens drei Tragflächen 24, auf welche ein Kochgeschirr (Topf, Pfanne, Platte) stellbar ist.

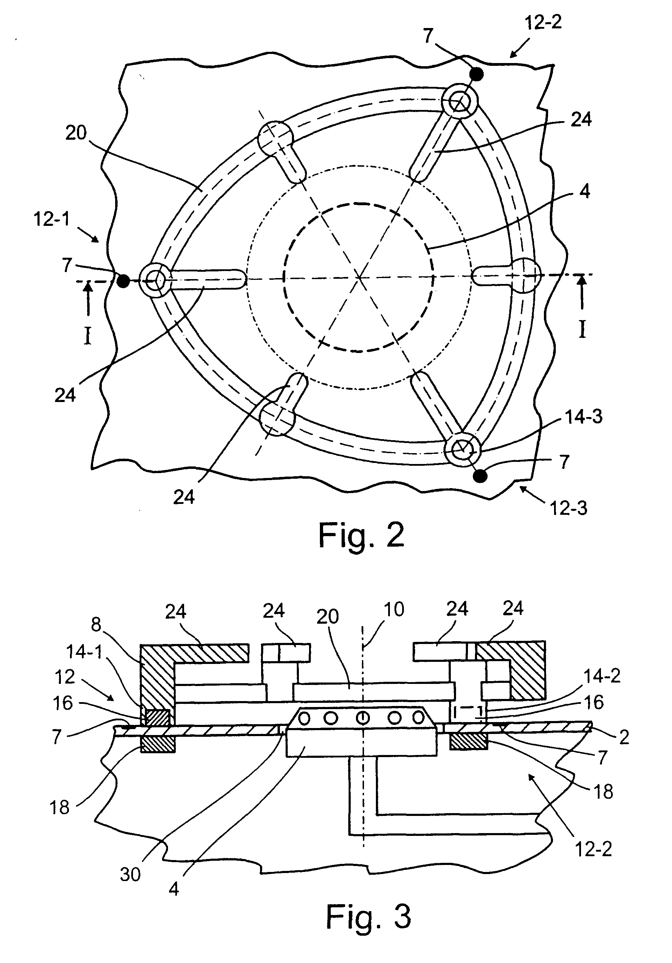

Gemäß der Ausführungsform von Fig. 3 befindet sich in der Deckplatte 2 eine Öffnung 30, in oder durch welche die Gasflammen 6 oder der Gasbrenner 4 ragen kann.

## Patentansprüche

1. Gaskochgerät enthaltend mindestens einen Gasbrenner (4) und einen dem Gasbrenner zugeordneten Topfträger (8), der auf einer Deckplatte (2) angeordnet ist, **dadurch gekennzeichnet, daß** eine Dauermagnetanordnung (12, 16, 18) vorgesehen ist, welche den Topfträger (8) an der Deckpiatte (2) relativ zum Gasbrenner (4) in einer vorbestimmten Position magnetisch hält, und dass die Dauermagnetanordnung (12) mindestens zwei um die vertikale Mittelachse (10) des Gasbrenners (4) herum verteilte Dauermagnet-Verbindungsstellen (12-1, 12-2, 12-3) aufweist, die je einen am Topfträger (8) und einen an der Deckplatte (2) angeordneten Magnetteil (16, 18) aufweisen, welche einander gegenüberliegend angeordnet sind, wobei mindestens der eine Magnetteil ein Dauermagnet ist und der zugehörige andere Magnetteil entweder ein von diesem Dauermagneten magnetisch anziehbares Material oder ein von diesem Dauermagneten magnetisch anziehbarer weiterer Dauermagnet mit entgegengesetzter Polarität ist.

2. Gaskochgerät nach Anspruch 1, **dadurch gekennzeichnet, daß** der Topfträger (8) einen Grundkörper (20) aus nicht-magnetischem, nichtmagnetisierbarem Material aufweist, an welchem die Magnetteile (16) befestigt sind.

3. Gaskochgerät nach Anspruch 1 oder 2, **dadurch gekennzeichnet, daß** der Topfträger (8) mindestens drei nach unten ragende Beine (14-1, 14-2, 14-3) aufweist, an deren unteren Enden die Magnetteile (16) angeordnet sind.

4. Gaskochgerät nach einem der Ansprüche 1 bis 3, **dadurch gekennzeichnet, daß** die Deckplatte (2) eine hitzebeständige Platte aus nicht-magnetischem, nicht magnetisierbarem Material ist, unterhalb von welcher der mindestens eine Gasbrenner (4) angeordnet ist, wobei die Deckplatte über den mindestens einen Gasbrenner sich geschlossen erstreckt und ein Kochfeld bildet.

5. Gaskochgerät nach Anspruch 4, **dadurch gekennzeichnet, daß** die platte (2) eine Glaskeramikplatte ist.

6. Gaskochgerät nach einem der vorhergehenden Ansprüche, **dadurch gekennzeichnet, daß** die Deckplatte (2) mit Markierungen (7) zur Positionierung des Topfträgers (8) versehen ist.

## Claims

1. Gas cooking appliance comprising at least one gas burner (4) and a pot carrier (8), which is associated with the gas burner and which is arranged on a top plate (2), **characterised in that** a permanent magnet arrangement (12, 16, 18) is provided, which magnetically retains the pot carrier (8) at the top plate (2) in a predetermined position relative to the gas burner (4) and that the permanent magnet arrangement (12) comprises at least two permanent magnet connecting points (12-1, 12-2, 12-3) which are distributed around the vertical centre axis (10) of the gas burner (4) and which each have a magnet part (16) arranged at the pot carrier (8) and a magnet part (18) arranged at the top plate (2), the magnet parts being arranged opposite one another, wherein at least one magnet part is a permanent magnet and the associated other magnet part is either a material magnetically attractible by this permanent magnet or a further permanent magnet with opposite polarity and attractible by this permanent magnet.

2. Gas cooking appliance according to claim 1, **characterised in that** the pot carrier (8) comprises a base body (20) of non-magnetic and non-magnetisable material to which the magnet parts (16) are fastened.

3. Gas cooking appliance according to claim 1 or 2, **characterised in that** the pot carrier (8) has at least three downwardly projecting legs (14-1, 14-2, 14-3), at the lower ends of which the magnet parts (16) are arranged.

4. Gas cooking appliance according to one of claims 1 to 3, **characterised in that** the top plate (2) is a heat-resistant plate of non-magnetic and non-magnetisable material, below which the at least one gas burner (4) is arranged, wherein the top plate extends over the at least one gas burner in closed manner and forms a cooking field.

5. Gas cooking appliance according to claim 4, **characterised in that** the plate (2) is a glass-ceramic plate.

6. Gas cooking appliance according to one of the preceding claims, **characterised in that** the top plate (2) is provided with markings (7) for positioning the pot carrier (8).

## Revendications

1. Appareil de cuisson à gaz comprenant au moins un brûleur à gaz (4) et un support de casserole (8) associé au brûleur à gaz qui est disposé sur une plaque de recouvrement (2), **caractérisé en ce qu'**un dispositif à aimants permanents (12, 16, 18) est prévu, lequel maintient magnétiquement le support de casserole (8) sur la plaque de recouvrement (2) par rapport au brûleur à gaz (4) dans une position prédéterminée, et **en ce que** le dispositif à aimants permanents (12) présente au moins deux positions de liaison par aimant permanent (12-1, 12-2, 12-3) réparties autour de l'axe médian vertical (10) du brûleur à gaz (4) qui présentent chacune une partie formant aimant (16, 18) disposée sur le support de casserole (8) et une sur la plaque de recouvrement (2), lesquelles sont disposées en étant opposées les unes aux autres, dans lequel l'au moins une partie formant aimant est un aimant permanent et l'autre partie formant aimant associée est soit une matière attirable magnétiquement par cet aimant permanent, soit un autre aimant permanent attirable magnétiquement par cet aimant permanent avec une polarité opposée.

2. Appareil de cuisson à gaz selon la revendication 1, **caractérisé en ce que** le support de casserole (8) présente un corps de base (20) en matière non magnétique, non magnétisable, sur laquelle sont fixées les parties formant aimants (16).

3. Appareil de cuisson à gaz selon la revendication 1 ou 2, **caractérisé en ce que** le support de casserole (8) présente au moins trois pieds (14-1, 14-2, 14-3) faisant saillie vers le bas sur les extrémités inférieures desquelles sont disposées les parties formant aimants (16).

4. Appareil de cuisson à gaz selon l'une des revendications 1 à 3, **caractérisé en ce que** la plaque de recouvrement (2) est une plaque réfractaire en matière non magnétique, non magnétisable, en dessous de laquelle est disposé le au moins un brûleur à gaz (4), la plaque de recouvrement s'étendant de façon à recouvrir complètement l'au moins un brûleur à gaz et formant une plaque de cuisson.

5. Appareil de cuisson selon la revendication 4, **caractérisé en ce que** la plaque (2) est une plaque en vitrocéramique.

6. Appareil de cuisson selon l'une des revendications précédentes, **caractérisé en ce que** la plaque de recouvrement (2) est dotée de repères (7) pour positionner le support de casserole (8).
